# EUROPEAN PATENT SPECIFICATION

(11) **EP 2 119 934 B1**
(45) Date of publication and mention of the grant of the patent: **12.02.2014**
(21) Application number: 09425173.3
(22) Date of filing: 06.05.2009
(51) Int. Cl.: F16D 69/04, F16D 65/092

(54) **Sintered material friction shoes for disc brakes of railway wheeled vehicles**
Gesinterte Materialreibschuhe für Scheibenbremsen für Fahrzeuge mit Schienenberäderung
Sabots de friction en matériau fritté pour freins à disque de véhicules ferroviaires à roues

(30) Priority: 16.05.2008 IT RM20080259
(43) Date of publication of application: 18.11.2009
(73) Proprietor: NCFA S.r.l., 80125 NAPOLI (IT)
(72) Inventor: Russo, Sergio, 80134 Napoli (IT)
(74) Representative: Iannone, Carlo Luigi

(56) References cited:
- EP-A- 0 459 917
- WO-A-87/06315
- DE-A1-102006 044 816
- US-A- 5 191 955

## Description

The present invention relates to sintered material friction pads for disc brakes of railway wheeled vehicles.

More specifically, the invention concerns friction pads of the above kind permitting a homogeneous distribution of contact pressure between brake pad and counter face of the disc during the arc of each breaking.

As it is well known, different types of sintered material pads are known, providing mounting of each single button on the base plate by interposition of elastic elements (Belleville springs or restrained laminas) promoting, during the braking arc, a more homogeneous contact between different buttons comprising the pad and the counter face of the brake disc, absorbing deformation of the base plate due to the thermal load generated during the braking action.

Lacking these system, due two the thermal deformation of base plate only some buttons, remaining contacting the disc, overheat and expand much more than those not intervening in the braking action, thus determining an amplification of the phenomenon. Thus, high temperature concentration can be generated during the braking action in some parts of the disc, damaging the same. Document US 5191955 discloses a sintered material friction pad according to the preamble of claim 1.

In a view of the above, the Applicant has realized friction pads that can solve the above mentioned problems, mainly eliminating the use of metallic elastic elements between inserts and base plate.

It is therefore specific object of the present invention to provide a sintered material friction pad for disc brakes of railway wheeled vehicles, according to the specification in claim 1.

Preferably, 4 or 5 sintered material buttons are provided for each single right or left pad, said pads being specular each other.

Particularly, in case 4 buttons are provided, area occupied will be within the range between 30 and 38 cm² for each button.

In case 5 buttons are provided, area occupied will be within the range between 27 and 30 cm² for each button.

Still according to the invention, each button has area destined to contact the brake disk enclosed within a polygonal area, particularly within a circular sector.

Preferably, according to the invention, coupling between button's metallic support and base plate is obtained by nailing/riveting.

In a preferred embodiment of the pad according to the invention, said buttons are placed so that:
- average circumference of each button is tangent to the circumference having the origin at the centre of disc and passing through the figure centre of the same button;
- barycentre of the total friction area lies on axis of dovetail element, the position of which with respect to the disc centre is fixed by the UIC Rules;
- buttons are suitably offset each other so as to have a uniform wearing of the disc.

According to the invention, said at least one plug has a height equal to the height of the button.

Particularly, according to the invention, one or more plugs can be provided for each button.

Still according to the invention, each plug can be fully surrounded by button material, or with button material and plug material alternating each other.

In a preferred embodiment of the invention, sintered mixture of said at least one plug has a percentage of iron highly lower than the percentage of the sintered mixture composing the button.

Still preferably according to the invention, sintered material of button A has a thermal dilatation coefficient of about 1,1 x 10⁻⁵ °C⁻¹, while plug sinter material B has a thermal dilatation coefficient of about 1,5 x 10⁻⁵ °C⁻¹.

Always according to the invention, surface occupied by said at least one plug is within the range between 19% and 26% of the total area of the single button.

Still according to the invention, cross section (parallel to friction surface) of said plug could be closed by a polygonal line or by a circumference.

Particularly, fixing of button's metallic support on the plate can occur by one, two or three nails/rivets.

Preferably, according to the invention, said element for coupling with the pad holder is comprised of a dovetail element, coupled with said base plate by nailing or welding.

In a particular embodiment of the pad according to the invention, contact surface between base plate and button's metallic support is realized by drawing/hemi-punching.

The present invention will be now described, for illustrative but not limitative purposes, according to its preferred embodiments, with particular reference to the figures of the enclosed drawings, wherein:
figure 1 is a plan view of a first left friction pad according to the invention;
figure 2 is a plan view of a second left friction pad according to the invention;
figure 3 is a plan view of a third left friction pad according to the invention;
figure 4 is a plan view of a fourth left friction pad according to the invention;
figure 5 is a plan view of a fifth left friction pad according to the invention;
figure 6 is a plan view of a sixth left friction pad according to the invention;
figure 7 is a plan view of a seventh left friction pad according to the invention;
figure 8 is a plan view of a eight left friction pad according to the invention;
figure 9 is a plan view of a ninth left friction pad according to the invention;
figure 10 is a plan view of a tenth left friction pad according to the invention;
figure 11 is a plan view of a left friction pad provided with four buttons;
figure 12 is a rear view of left friction pad of figure 11;
figure 13 is a lateral view of left friction pad of figure 11;
figure 14 is a front view of a left friction pad provided with five buttons;
figure 15 is a rear view of left friction pad of figure 14;
figure 16 is a lateral view of a left friction pad of figure 15;
figures 17a and 17b are respectively a plan view and a section view of a first type of friction button with a plug and a fixing nail;
figures 18a and 18b are respectively a plan view and a section view of a friction button with a second type of plug and a fixing nail;
figures 19a and 19b are respectively a plan view and a section view of a third type of friction button with two plugs and a fixing nail;
figures 20a and 20b are respectively a plan view and a section view of a fourth type of friction button with a plug and a fixing nail;
figures 21a and 21b are respectively a plan view and a section view of a fifth type of friction button with two plugs and a fixing nail;
figures 22a and 22b are respectively a plan view and a section view of a sixth type of friction button with two plugs and a fixing nail;
figures 23a and 23b are respectively a plan view and a section view of a seventh type of friction button with a plug and a fixing nail;
figures 24a and 24b are respectively a plan view and a section view of a eight type of friction button with a plug and a fixing nail;
figures 25a and 25b are respectively a plan view and a section view of a ninth type of friction button with a plug and a fixing nail;
figures 26a and 26b are respectively a plan view and a section view of a tenth type of friction button with a plug and a fixing nail;
figures 27a and 27b are respectively a plan view and a section view of a eleventh type of friction button with a plug and a fixing nail;
figures 28a and 28b are respectively a plan view and a section view of a twelfth type of friction button with a plug and a fixing nail;
figures 29a and 29b are respectively a plan view and a section view of a thirteenth type of friction button with a plug and a fixing nail;
figures 30a and 30b are respectively a plan view and a section view of a fourteenth type of friction button with a plug and a fixing nail;
figures 31a and 31b are respectively a plan view and a section view of a fifteenth type of friction button with a plug and a fixing nail;
figures 32a, 32b and 32c are respectively a plan and section view of the metallic support of button without friction element and its partial section view of the base plate of friction pad with one fixing nail;
figures 33a, 32b and 32c are respectively a plan and section view of the metallic support of button without friction element and its partial section view of the base plate of friction pad with two fixing nails; and
figures 34a, 34b and 34c are respectively a plan and section view of the metallic support of button without friction element and its partial section view of the base plate of friction pad with three fixing nails;

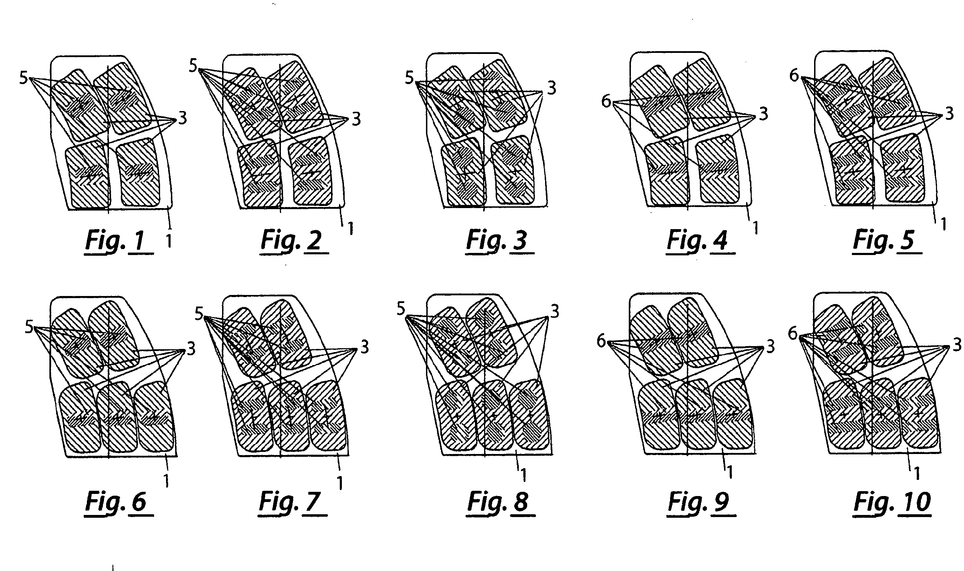

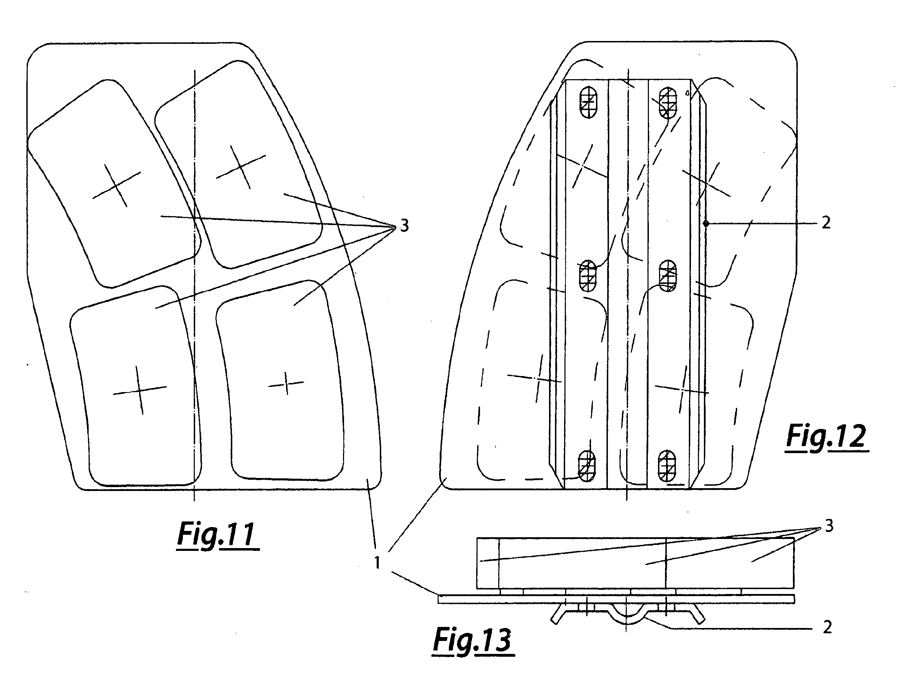

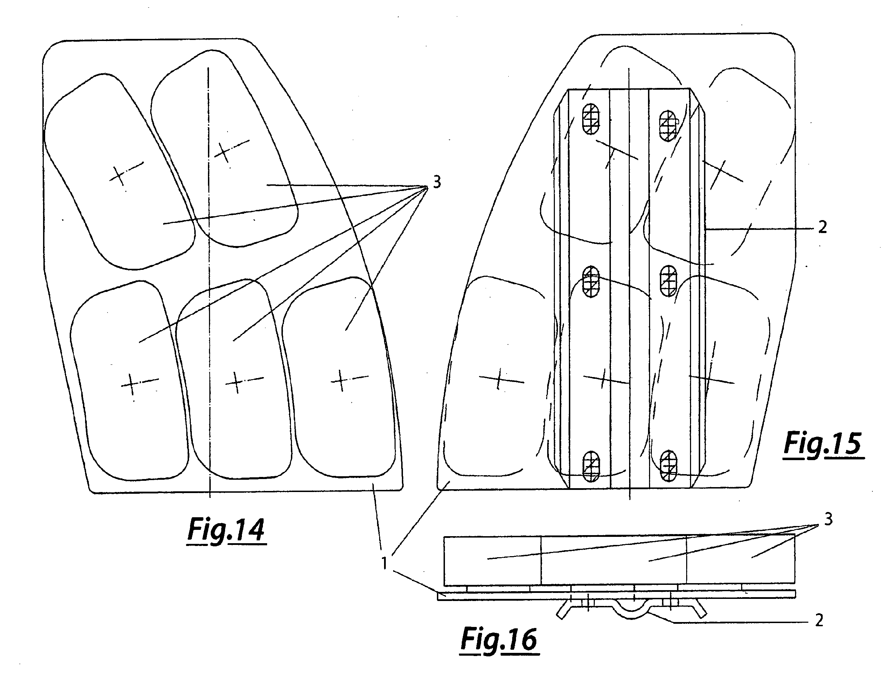

Observing the figures of the enclosed drawings, it is shown the solution according to the invention, concerning disc brake pad friction comprising a base plate (1), on which, on one side it is fixed a dovetail element (2), for mounting in pad holders (not shown) which are according to the European Standards (UIC rules), and on the other side are mounted and fixed, by nailing/riveting, some buttons (3) composed of sintered material braze-welded on metallic supports (4) (see particularly figures 1-30).

buttons (3) can be, according to the specific application, in number of four or five for each right or left pad.

In case four buttons (3) are provided, friction area of each button (3) will vary within the range between 30 and 38 cm², while in case five buttons (3) are provided, friction area of each one will be within the range between 27 and 30 cm².

Particularly, four buttons (3) will be provided for brakes of trains travelling at a speed up to 200 km/h, for pads for disc having outer diameter of 640 mm (button area of 38 cm²) and for pads for disc with outer diameter up to 610 mm (button area 30 cm²) (figures 1-5).

Instead, button (3) will five in number for brakes mounted on trains travelling at a speed higher than 200 km/h (button area 30 cm²) (figures 6-10).

Each button (3) has contact area with disc enclosed within a polygonal line - particularly, in the figures they are represented by circular sectors.

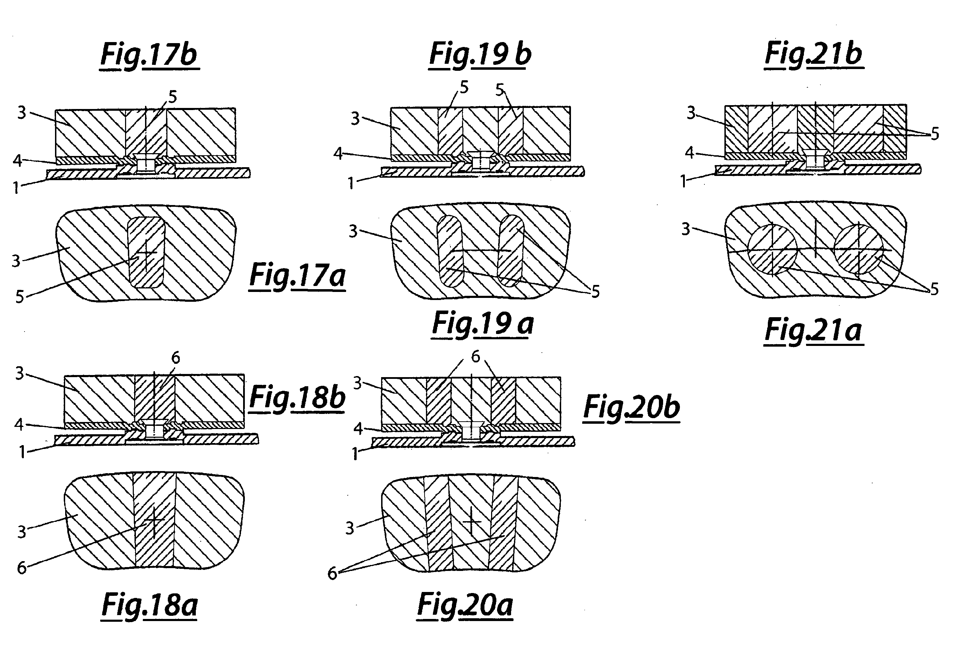

Each button (3) is coupled by braze-welding on a base metallic support (4) (see figures 17-31).

buttons (3) are fixed on plate (1) by nailing/riveting and are offset each other on the some plate so as to fulfil the following conditions:
- average circumference of each button (3) is tangent to the circumference having the origin at the centre of disc and passing through the figure centre of the same button (3);
- barycentre of the total friction area lies on axis of dovetail element, the position of which with respect to the disc centre is fixed by the UIC Rules;
- buttons (3) are suitably offset each other so as to have a uniform wearing of the disc.

Solution suggest according to the present invention does not provide, as in the known solutions, the use of elastic elements between buttons (3) and base plate (1) (which in any case are critical), but it provides burying within the sintered mixture of single button (3) (mixture A), one or two prismatic plugs (5 or 6), composed of a sintered mixture (mixture B) different with respect to the one employed for button, so that prismatic plugs (5 or 6) have physical features different with respect to the remaining parts of button (3), particularly a higher thermal expansion coefficient and a higher compressibility.

Usually, in order to manufacture sintered material friction pad for disc brakes, mixtures are used containing copper powder (up to 70%) and iron (up to 35%), besides other powders, present in a lower percentage, such as graphite, chromium and molybdenum powder.

Bearing in mind that copper thermal dilatation coefficient is remarkably higher than iron coefficient, in order to realize prismatic plugs a mixture will be employed having a remarkably lower percentage of iron with respect to the percentage contained in a mixture of buttons. A typical value of the thermal dilatation coefficient of sintered mixture A is represented by about 1.1 x 10⁻⁵ °C⁻¹, while for mixture Y it is possible obtaining values higher than 1.5 x 10⁻⁵ °C⁻¹.

It is further known that iron powder percentage of the mixture also influences compressibility of material obtained after sintering.

In this case, according to the invention, mixture Y contains a lower amount of iron powder, thus being more compressible with respect to mixture A composing button 3, the difference being about 25%.

Thus, higher thermal expansion of prismatic plugs (5 or 6), along with higher compressibility, promotes, also in presence of thermal distortions of the base plate (1), contact of all the buttons (3) with counter face of disc during the braking through the plugs (5 or 6).

Sum of friction surface of prismatic plugs (5 or 6) will vary between 19% and 26% of total friction area of single insert (3) in function of the different application. Particularly, for brakes to be employed on trains running at a speed up to 200 km/h, said percentage will be:
- Intercity: 19%
- TSR: 20%
- AGC:25%

For brakes to mounted on trains with running at a speed higher than 200 km/h:
- trains ETR 460-500: 20%
- trains TGV, AGV: 26%.

Cross section (parallel to the friction surface) of a single prismatic plugs (5 or 6) buried within button (3) can be enclosed by a polygonal line (for example rectangular, trapezoidal, pentagonal, hexagonal, etc.) or by a circumference.

Prismatic plugs (5 or 6) have the same height of button (3) wherein they are buried and are oriented in such a way that their figure main axis is perpendicular to the average circumference passing through the figure centre of button and suitably spaced and symmetric with respect to the same.

An alternative solution provides realizing button (3) and plug (6) by the two materials A and B, having the above features, alternated each other so as to have three or five sectors made up of different materials (A,B) alternating each other in a circumferential direction (see figures 17 - 31).

Friction surface of material B of plugs is included within the range between 18% and 26% of the total surface of the single button (3), in function of the different constructive solution and of the different applications.

Main figure axis of sectors composed of material B (6) is in this case perpendicular to the average circumference passing through the figure centre of button (3). Each sector comprised of material A will have the same surface. In this way, in case a total of five sectors is provided, it is determined the position of two material sectors B (6).

In case a total of three sectors are present, material B sector will be placed at the half of button, and symmetrical with respect to the same.

In line of principle, according to the invention, it is chosen the solution providing prismatic plugs (5) composed of material B buried in the button (3), which is composed of material A, when it is realized for an application providing strong operative vibrations:
- one or two plugs are buried in brakes for AGC and TSR (figures 1- 3);
- one or two plugs are buried in brakes for TGV and AGV (figures 6-8);

Solution providing sectors composed of material B interposed between sectors of button (3) composed of material A is provided for:
- one or two plugs are buried in brakes for Intercity (figures 4-5);
- one or two plugs are buried in brakes for ETR 460 - 500 (figures 9-10);

As to the pad under examination, it is provided a rigid fixing of the four/five buttons (3) on base plate (1) by riveting or nailing.

In correspondence of fixing rivets/nails, either base plate (1) and single metallic supports (4) braze-welded on sintered buttons have drawing/hemi-punching with flat reliefs limiting the contact region between base plate (1) and metallic support (4) of the sintered buttons (3), thus permitting a better dispersion of the thermal load generated during braking, thanks to the air circulation due to the rotation of the disc and flow generated from the speed of the railway vehicle.

Three different solutions are provided for fixing sintered buttons (3) to the base plate (1), in function of different applications.

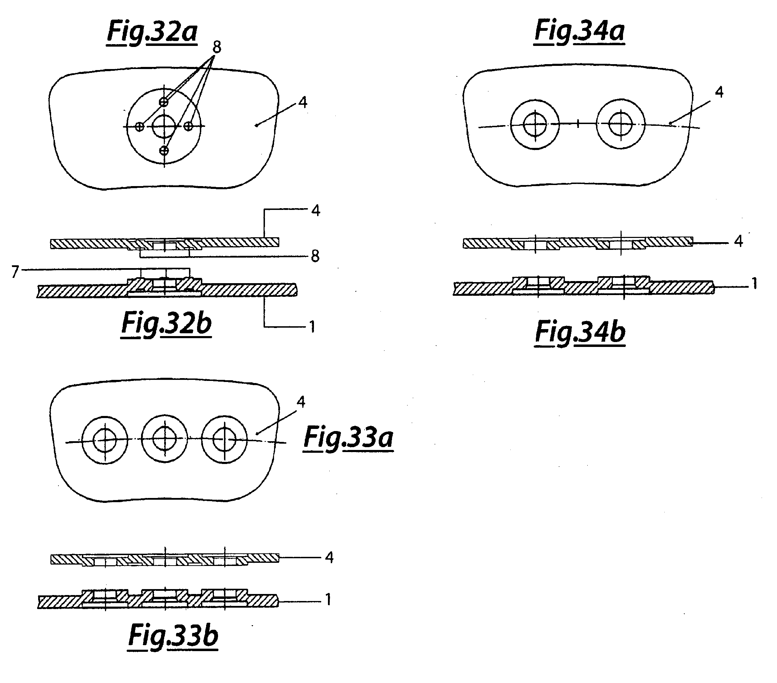

First solution (figures 1-5) provide the use of a single rivet/nail for each button (3), provided in correspondence of the figure centre of the same, figures 17 - 21. Four projections (7) and four housing (8) for the same are provided on contact surface between base plate (1) and button (3) (drawing/hemi-punching on base plate (1) drawing/hemi-punching on button's metallic support (4), preventing rotation of button (3) due to the different peripheral sliding speeds of the single button (3), relieving the momentum that would otherwise be applied on riveting/nailing, figures 32a and 32b.

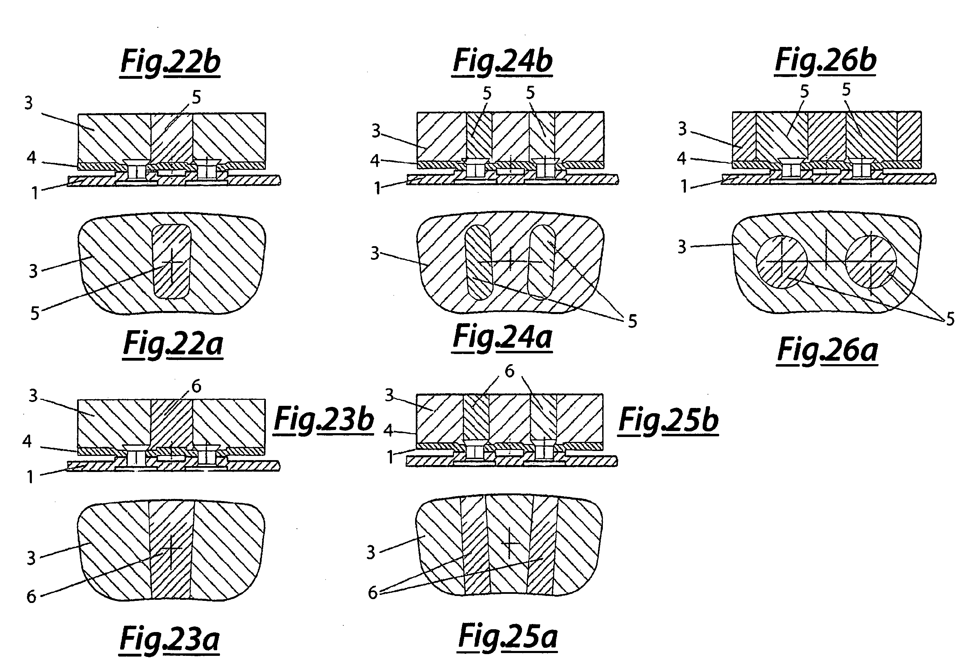

Second solution (figures 6 - 10) provides the use of two nails/rivets lying on the average circumference of the area of the circular sector (button (3)) passing through the figure centre and equidistant with respect to the same, figures 22 - 26.

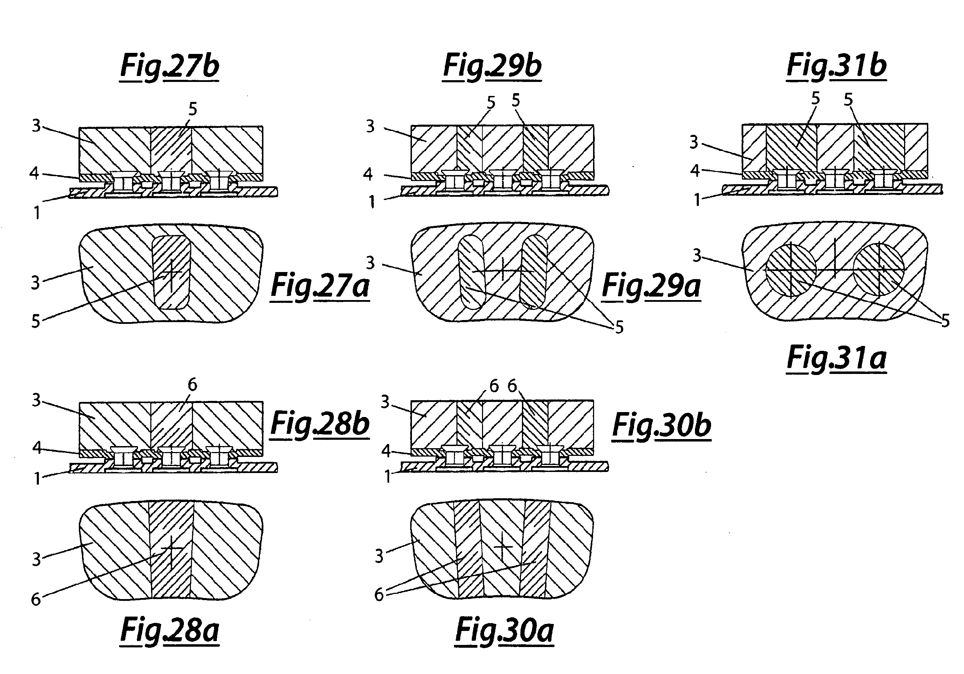

Third solution provides the use of three rivets/nails for each button (3), one of which laying in correspondence of the figure centre of the button (3) and the other two on the average circumference passing through the figure centre and equidistant with respect to the same, figures 27 - 31.

Choice of using one, two or three nails/rivets is made in function of the stress value due to the operative vibrations and mainly to the particular typo of train:
- AGC, TSR trains: 3 nails/rivets for each button;
- Intercity, TGV, AGV trains: 2 nails/rivets for each button;
- ETR 460 - 500 trains: 1 nail/rivet for each button.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Sintered material friction pad for disc brakes of railway
wheeled vehicles, comprising a base plate (1), a coupling element provided with a pad holder (2), which is under said base plate, and a plurality of friction material buttons (3), mounted above said base plate, each one of said buttons providing at least a plug (5,6), said button and said at least one plug being composed of different sintered mixtures (A, B), **characterized in that** said at least one plug having a higher coefficient of thermal expansion and a higher compressibility with respect to said button, and **in that** friction surface area of said at least one plug is within the range between 19% and 26% of the total friction surface area of the single button.

2. Friction pad according to one of the preceding claims, **characterized in that** sintered mixture of said at least one plug (5,6) has a percentage of iron highly lower than the percentage of the sintered mixture composing the button (3).

3. Friction pad according to one of the preceding claims, **characterized in that** sintered material (A) composing a button (3) has a thermal dilatation coefficient of about 1,1 x 10⁻⁵ °C⁻¹, while plug (5,6) sintered material B has a thermal dilatation coefficient of about 1,5 x 10⁻⁵ °C⁻¹.

4. Friction pad according to one of the preceding claims, **characterized in that** 4 or 5 sintered material buttons (3) are provided for each single right or left pad, said pads being specular each other.

5. Friction pad according to one of preceding claims, **characterized in that** in case 4 buttons (3) are provided, area occupied will be within the range between 30 and 38 cm² for each button.

6. Friction pad according to one of the preceding claims, **characterized in that** in case 5 buttons (3) are provided, area occupied will be within the range between 27 and 30 cm² for each button.

7. Friction pad according to one of the preceding claims, **characterized in that** each button (3) has area destined to contact the brake disc enclosed within a polygonal area, particularly within a circular sector.

8. Friction pad according to one of the preceding claims, **characterized in that** coupling between button (3) and base plate (1) is obtained by nailing/riveting.

9. Friction pad according to one of preceding claims, **characterized in that** said buttons (3) are placed so that:
- average circumference of each button is tangent to the circumference having the origin at the centre of disc and passing through the figure centre of the same button;
- barycentre of the total friction area lies on axis of dovetail element, the position of which with respect to the disc centre is fixed by the UIC Rules;
- buttons are suitably offset each other so as to have a uniform wearing of the disc.

10. Friction pad according to one of the preceding claims, **characterized in that** said at least one plug (5,6) has a height equal to the height of the button (3).

11. Friction pad according to one of the preceding claims, **characterized in that** one or more plugs (5,6) are provided for each button (3).

12. Friction pad according to one of the preceding claims, **characterized in that** each plug (5) is fully surrounded by button material (3), or with button material (A) and plug (6) material (B) alternating each other.

13. Friction pad according to one of the preceding claims, **characterized in that** cross section, parallel to friction surface, of said button (3) is closed by a polygonal line or by a circumference.

14. Friction pad according to one of the preceding claims, **characterized in that** fixing of button (3) on the plate (1) occurs by one, two or three nails/rivets.

15. Friction pad according to one of the preceding claims, **characterized in that** said element for coupling with the pad holder (2) is comprised of adovetail element, coupled with said base plate (1) by nailing or welding.

16. Friction pad according to one of the preceding
claims, **characterized in that** contact surface between base plate (1) and button support (4) is realized by drawing/hemi-punching.

## Patentansprüche

1. Sintermaterial-Bremsbelag für Scheibenbremsen von Schienenweg-Radfahrzeugen, umfassend eine Basisplatte (1), ein Kupplungselement, versehen mit einem Belaghalter (2), der unter der Basisplatte ist, und eine Vielzahl von Reibmaterial-Knöpfen (3), die oberhalb der Basisplatte montiert sind, wobei jeder der Knöpfe mindestens einen Stopfen (5, 6) bereitstellt, wobei der Knopf und der mindestens eine Stopfen aus verschiedenen gesinterten Mischungen (A, B) zusammengesetzt sind, **dadurch gekennzeichnet, dass** der mindestens eine Stopfen in Bezug auf den Knopf ein höheren Koeffizienten der thermischen Expansion und eine höhere Kompressibilität aufweist und dass eine Reiboberflächenfläche des mindestens einen Stopfens in dem Bereich zwischen 19% und 26% der gesamten Reiboberflächenfläche des einzelnen Knopfes ist.

2. Bremsbelag gemäß einem der vorhergehenden Ansprüche, **dadurch gekennzeichnet, dass** die gesinterte Mischung des mindestens einen Stopfens (5, 6) einen Anteil von Eisen aufweist, der erheblich geringer als der Anteil der gesinterten Mischung ist, welche den Knopf (3) bildet.

3. Bremsbelag gemäß einem der vorhergehenden Ansprüche, **dadurch gekennzeichnet, dass** das gesinterte Material (A), das einen Knopf (3) bildet, einen thermischen Dilatationskoeffizienten von ungefähr 1,1 x 10⁻⁵ °C⁻¹ aufweist, während das gesinterte Material (B) des Stopfens (5, 6) einen thermischen Dilatationkoeffizienten von ungefähr 1,5 x 10⁻⁵ °C⁻¹ aufweist.

4. Bremsbelag gemäß einem der vorhergehenden Ansprüche, **dadurch gekennzeichnet, dass** 4 oder 5 Knöpfe (3) gesinterten Materials für jeden einzelnen rechten oder linken Belag bereitgestellt sind, wobei die Beläge zueinander spiegelnd sind.

5. Bremsbelag gemäß einem der vorhergehenden Ansprüche, **dadurch gekennzeichnet, dass**, falls 4 Knöpfe (3) vorgesehen sind, eine eingenommene Fläche für jeden Knopf im Bereich zwischen 30 und 38 cm² sein wird.

6. Bremsbelag gemäß einem der vorhergehenden Ansprüche, **dadurch gekennzeichnet, dass**, falls 5 Knöpfe (3) vorgesehen sind, eine eingenommene Fläche für jeden Knopf im Bereich zwischen 27 und 30 cm² sein wird.

7. Bremsbelag gemäß einem der vorhergehenden Ansprüche, **dadurch gekennzeichnet, dass** jeder Knopf (3) eine Fläche aufweist, die bestimmt ist, die Bremsscheibe zu berühren, die in einer polygonalen Fläche, insbesondere in einem Kreissektor eingeschlossen ist.

8. Bremsbelag gemäß einem der vorhergehenden Ansprüche, **dadurch gekennzeichnet, dass** ein Kuppeln zwischen dem Knopf (3) und der Basisplatte (1) durch Nagelung/Nietverbindung erhalten wird.

9. Bremsbelag gemäß einem der vorhergehenden Ansprüche, **dadurch gekennzeichnet, dass** die Knöpfe (3) platziert sind, so dass:
- ein mittlerer Umfang von jedem Knopf den Umfang berührt, der einen Ursprung in der Mitte der Scheibe aufweist und durch die Gestaltmitte des selben Knopfes hindurchtritt;
- ein Schwerpunkt der gesamten Reibfläche auf einer Achse eines Zinkenelements liegt, dessen Position auf die Scheibenmitte durch die UIC-Regeln fixiert ist;
- Knöpfe geeignet gegenseitig versetzt sind, um so eine gleichförmige Abnutzung der Scheibe zu haben.

10. Bremsbelag gemäß einem der vorhergehenden Ansprüche, **dadurch gekennzeichnet, dass** der mindestens eine Stopfen (5, 6) eine Höhe aufweist, die gleich der Höhe des Knopfes (3) ist.

11. Bremsbelag gemäß einem der vorhergehenden Ansprüche, **dadurch gekennzeichnet, dass** einer oder mehrere Stopfen (5, 5) für jeden Knopf (3) vorgesehen sind.

12. Bremsbelag gemäß einem der vorhergehenden Ansprüche, **dadurch gekennzeichnet, dass** jeder Stopfen (5) vollständig durch Knopf-Material (3) umgeben ist, oder mit Knopf-Material (A) und Material (B) des Stopfens (6), die einander abwechseln.

13. Bremsbelag gemäß einem der vorhergehenden Ansprüche, **dadurch gekennzeichnet, dass** ein Querschnitt, parallel zur Reiboberfläche, des Knopfes (3) durch eine polygonale Linie oder durch eine Kreislinie eingeschlossen ist.

14. Bremsbelag gemäß einem der vorhergehenden Ansprüche, **dadurch gekennzeichnet, dass** ein Fixieren des Knopfes (3) auf der Platte (1) durch einen, zwei oder drei Nägel/Nieten erfolgt.

15. Bremsbelag gemäß einem der vorhergehenden Ansprüche, **dadurch gekennzeichnet, dass** das Element zum Koppeln des Belaghalters (2) ein Zinkenelement umfasst, das mit der Basisplatte (1) durch Nagelung oder Nietverbindung verbunden ist.

16. Bremsbelag gemäß einem der vorhergehenden Ansprüche, **dadurch gekennzeichnet, dass** eine Kontaktfläche zwischen der Basisplatte (1) und einem Knopfträger (4) durch Ziehen/Hemi-Stanzen realisiert ist.

## Revendications

1. Garniture de friction en matériau fritté pour freins à disque de véhicules ferroviaires à roues, comprenant une plaque de base (1), un élément de couplage pourvu d'un porte-garniture (2), qui se trouve sous ladite plaque de base, et une pluralité de boutons en matériau de friction (3), montés au-dessus de ladite plaque de base, chacun desdits boutons étant pourvu d'au moins un tampon (5, 6), ledit bouton et ledit au moins un tampon étant constitués de mélanges frittés différents (A, B), **caractérisée en ce que** ledit au moins un tampon a un coefficient de dilatation thermique et une compressibilité plus élevés que ceux dudit bouton, et **en ce que** la superficie de friction dudit au moins un tampon est comprise dans la plage de 19 % à 26 % de la superficie de friction totale du bouton individuel.

2. Garniture de friction selon l'une des revendications précédentes, **caractérisée en ce que** le mélange fritté dudit au moins un tampon (5, 6) a un pourcentage de fer très inférieur à celui du mélange fritté constituant le bouton (3).

3. Garniture de friction selon l'une des revendications précédentes, **caractérisée en ce que** le mélange fritté (A) dont est constitué un bouton (3) a un coefficient de dilatation thermique d'environ 1,1 x 10⁻⁵ °C⁻¹, tandis que le matériau fritté (B) d'un tampon (5, 6) a un coefficient de dilatation thermique d'environ 1,5 x 10⁻⁵ °C⁻¹.

4. Garniture de friction selon l'une des revendications précédentes, **caractérisée en ce que** 4 ou 5 boutons en matériau fritté (3) sont prévus pour chaque garniture individuelle droite ou gauche, lesdites garnitures étant symétriques entre elles.

5. Garniture de friction selon l'une des revendications précédentes, **caractérisée en ce que**, dans le cas où 4 boutons (3) sont prévus, la superficie occupée sera comprise dans la plage de 30 à 38 cm² pour chaque bouton.

6. Garniture de friction selon l'une des revendications précédentes, **caractérisée en ce que**, dans le cas où 5 boutons (3) sont prévus, la superficie occupée sera comprise dans la plage de 27 à 30 cm² pour chaque bouton.

7. Garniture de friction selon l'une des revendications précédentes, **caractérisée en ce que** chaque bouton (3) a une zone destinée à entrer en contact avec le disque de frein qui est enfermée dans une zone polygonale, en particulier dans un secteur circulaire.

8. Garniture de friction selon l'une des revendications précédentes, **caractérisée en ce qu'**un couplage entre le bouton (3) et la plaque de base (1) est obtenu par clouage/rivetage.

9. Garniture de friction selon l'une des revendications précédentes, **caractérisée en ce que** lesdits boutons (3) sont placés de telle sorte que :
- la circonférence moyenne de chaque bouton soit tangente à la circonférence ayant son origine au centre du disque et passant par le centre de la figure de ce même bouton ;
- le barycentre de la superficie de friction totale se trouve sur l'axe d'un élément en queue d'aronde, dont la position par rapport au centre du disque est fixée par les règles de l'UIC ;
- les boutons soient convenablement décalés les uns par rapport aux autres pour avoir une usure uniforme du disque.

10. Garniture de friction selon l'une des revendications précédentes, **caractérisée en ce que** ledit au moins un tampon (5, 6) a une hauteur égale à la hauteur du bouton (3).

11. Garniture de friction selon l'une des revendications précédentes, **caractérisée en ce qu'**un ou plusieurs tampons (5, 6) sont prévus pour chaque bouton (3).

12. Garniture de friction selon l'une des revendications précédentes, **caractérisée en ce que** chaque tampon (5) est entièrement entouré par le matériau du bouton (3), ou par du matériau (A) du bouton et du matériau (B) du tampon (6), alternant l'un avec l'autre.

13. Garniture de friction selon l'une des revendications précédentes, **caractérisée en ce qu'**une section transversale, parallèle à la surface de friction, dudit bouton (3) est fermée par une ligne polygonale ou par une circonférence.

14. Garniture de friction selon l'une des revendications précédentes, **caractérisée en ce que** la fixation du bouton (3) sur la plaque (1) se fait par un, deux ou trois clous/rivets.

15. Garniture de friction selon l'une des revendications précédentes, **caractérisée en ce que** ledit élément pour le couplage avec le porte-garniture (2) est constitué d'un élément en queue d'aronde, couplé avec ladite plaque de base (1) par clouage ou soudage.

16. Garniture de friction selon l'une des revendications précédentes, **caractérisée en ce qu'**une surface de contact entre la plaque de base (1) et le support de bouton (4) est réalisée par emboutissage/semi-découpage.
